# EUROPÄISCHE PATENTANMELDUNG

(11) **EP 2 862 699 A1**
(43) Veröffentlichungstag der Anmeldung: **22.04.2015**
(21) Anmeldenummer: 14188665.5
(22) Anmeldetag: 13.10.2014
(51) Int. Cl.: B29C 67/00, B33Y 10/00, B33Y 30/00, B28B 1/00, B29L 31/00

(54) **Dentaldruckvorrichtung**

(30) Priorität: 15.10.2013 DE 102013111387
(71) Anmelder: Renfert GmbH, 78247 Hilzingen (DE)
(72) Erfinder: Rieger, Sören, Dr., 78247 Hilzingen-Duchtlingen (DE)
(74) Vertreter: Daub, Thomas

(57) **Zusammenfassung**

Es wird eine Dentaldruckvorrichtung vorgeschlagen, mit zumindest einem Druckkopf (12a; 12b), mit zumindest einem Aufnahmebereich (14a; 14b) zur Aufnahme zumindest einer individuellen Druckbasis (16a; 16b) und mit zumindest einer Recheneinheit (18a; 18b), die zu einer Steuerung des zumindest einen Druckkopfs (12a; 12b) und/oder des zumindest einen Aufnahmebereichs (14a; 14b) zu einem Aufbringen von Druckmaterial (20a; 20b) auf zumindest eine individuell dreidimensional geformte Druckfläche (22a; 22b) der zumindest einen Druckbasis (16a; 16b) vorgesehen ist.

## Beschreibung

### Stand der Technik

Die Erfindung betrifft eine Dentaldruckvorrichtung.

Es sind bereits Druckvorrichtungen vorgeschlagen worden, die zu einem Drucken dentaler Objekte geeignet sind. Dabei handelt es sich insbesondere um 3D-Drucker.

Die Aufgabe der Erfindung besteht insbesondere darin, eine gattungsgemäße Vorrichtung mit verbesserten Eigenschaften hinsichtlich des Materialaufwands und des Zeitaufwands bei der Herstellung von Dentalobjekten bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Es wird eine Dentaldruckvorrichtung vorgeschlagen mit zumindest einem Druckkopf, mit zumindest einem Aufnahmebereich zur Aufnahme zumindest einer individuellen Druckbasis und mit zumindest einer Recheneinheit, die zu einer Steuerung des zumindest einen Druckkopfs und/oder des zumindest einen Aufnahmebereichs zu einem Aufbringen von Druckmaterial auf zumindest eine individuell dreidimensional geformte Druckfläche der zumindest einen Druckbasis vorgesehen ist. Es sind verschiedene, einem Fachmann als sinnvoll erscheinende Druckmaterialien denkbar. Vorzugsweise ist die Recheneinheit zu einer Steuerung des zumindest einen Druckkopfs und/oder des zumindest einen Aufnahmebereichs zu einem Aufdrucken eines Dentalobjekts auf die zumindest eine individuell dreidimensional geformte Druckfläche der zumindest einen Druckbasis vorgesehen. Bevorzugt besteht das Druckmaterial zumindest teilweise aus einem Polymer. Unter einer "Dentaldruckvorrichtung" soll in diesem Zusammenhang insbesondere eine Vorrichtung verstanden werden, die zu einer Herstellung von Elementen im dentalen Bereich, insbesondere von Dentalobjekten wie beispielsweise Halbzeugen, Zwischenprodukten und/oder Endprodukten vorgesehen ist. Vorzugsweise soll darunter insbesondere eine Vorrichtung verstanden werden, die zu einem 3D-Drucken, wie insbesondere in einem Rapid-Prototyping-Verfahren, von Elementen im dentalen Bereich vorgesehen ist. Es sind verschiedene, einem Fachmann als sinnvoll erscheinende Rapid-Prototyping-Verfahren denkbar, wie beispielsweise 3D-Druck, Lasermelting oder Stereolithographie. Ferner soll in diesem Zusammenhang unter einem "Druckkopf" insbesondere ein vorzugsweise bewegliches Bauteil der Dentaldruckvorrichtung verstanden werden, über welches in einem Betrieb direkt Druckmaterial auf eine Druckfläche aufgebracht wird. Des Weiteren soll unter einem "Aufnahmebereich" in diesem Zusammenhang insbesondere eine Einheit verstanden werden, die zu einer Aufnahme einer Druckbasis vorgesehen ist. Vorzugsweise soll darunter eine Einheit verstanden werden, die zu einer Herstellung einer form- und/oder kraftschlüssigen Verbindung mit einer Druckbasis vorgesehen ist. Bevorzugt ist die Einheit zu einer positionsfesten Aufnahme der Druckbasis vorgesehen. Besonders bevorzugt ist die Einheit dazu vorgesehen, die Druckbasis lösbar aufzunehmen. Unter einer "individuellen Druckbasis" soll in diesem Zusammenhang insbesondere eine Druckbasis verstanden werden, die zumindest teilweise abhängig von einem zu druckenden Erzeugnis, insbesondere einem Dentalobjekt, ausgebildet ist. Vorzugsweise soll darunter insbesondere eine Druckbasis verstanden werden, die zumindest einen für ein zu druckendes Dentalobjekt spezifischen, individuellen Parameter, wie insbesondere eine individuelle Form, eine individuelle Materialeigenschaft und/oder einen anderen, einem Fachmann als sinnvoll erscheinenden Parameter aufweist. Besonders bevorzugt weist die Druckbasis insbesondere eine für ein zu druckendes Dentalobjekt zumindest teilweise spezifische, individuelle Form auf. Die Form der Druckbasis ist dabei insbesondere zumindest teilweise an eine Form eines Kiefers eines Patienten angepasst. Dabei soll unter einer "Druckbasis" insbesondere ein Element oder eine Einheit verstanden werden, das oder die zumindest teilweise einen Untergrund für einen Druck bildet. Vorzugsweise soll darunter insbesondere ein Element oder eine Einheit verstanden werden, auf welchem oder welcher ein Druck aufgebaut wird. Ferner soll in diesem Zusammenhang unter einer "Recheneinheit" insbesondere eine Einheit mit einem Informationseingang, einer Informationsverarbeitung und einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Vorzugsweise sind die Bauteile der Recheneinheit auf einer gemeinsamen Platine angeordnet und/oder vorteilhaft in einem gemeinsamen Gehäuse angeordnet. Unter einer "individuell dreidimensional geformten Druckfläche" soll in diesem Zusammenhang insbesondere eine Druckfläche verstanden werden, welche eine spezifische, individuell dreidimensionale Form abbildet. Vorzugsweise soll darunter eine Druckfläche verstanden werden, die eine von einer ebenen Fläche differierende, makroskopisch dreidimensional geformte Fläche bildet. Dabei soll unter einer "makroskopisch dreidimensional geformten Fläche" insbesondere eine Fläche verstanden werden, bei welcher eine Länge einer kürzesten Kante eines kleinsten geometrischen Quaders, welcher die Fläche gerade noch vollständig umschließt, zumindest 1 mm, vorzugsweise zumindest 3 mm und besonders bevorzugt zumindest 5 mm beträgt. Dabei soll unter einer "Druckfläche" insbesondere eine Fläche der Druckbasis verstanden werden, die zumindest teilweise einen Untergrund für einen Druck bildet. Vorzugsweise soll darunter insbesondere eine Fläche verstanden werden, auf welche direkt aufgedruckt wird. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung der Dentaldruckvorrichtung kann insbesondere eine Dentaldruckvorrichtung bereitgestellt werden, bei der eine individuelle Druckbasis aufgenommen werden kann. Dadurch kann insbesondere eine Druckbasis an ein zu druckendes Dentalobjekt angepasst werden.

Ferner wird vorgeschlagen, dass der zumindest eine Aufnahmebereich dazu vorgesehen ist, die individuelle Druckbasis auswechselbar aufzunehmen. Dadurch kann insbesondere erreicht werden, dass die individuelle Druckbasis für jeden Druckvorgang gegen eine jeweils passende individuelle Druckbasis ausgetauscht werden kann. Dadurch kann wiederum erreicht werden, dass für jeden Druckvorgang eine individuell passende Druckbasis verwendet wird.

Des Weiteren wird vorgeschlagen, dass der zumindest eine Aufnahmebereich um und/oder entlang zumindest zwei Rotations- und/oder Translationsachsen bewegbar ausgebildet ist. Vorzugsweise ist der zumindest eine Aufnahmebereich durch die Recheneinheit um und/oder entlang zumindest zwei Rotations- und/oder Translationsachsen bewegbar. Besonders bevorzugt ist der zumindest eine Aufnahmebereich um zumindest zwei Rotationsachsen bewegbar ausgebildet. Dadurch kann insbesondere eine in dem Aufnahmebereich aufgenommene individuelle Druckbasis insbesondere während eines Druckvorgangs bewegt werden. Vorzugsweise kann dadurch insbesondere der Aufnahmebereich bzw. eine darin aufgenommene individuelle Druckbasis relativ zu dem Druckkopf bewegt werden. Dadurch kann insbesondere eine vorteilhafte Zugänglichkeit des Druckkopfs an der Druckbasis erreicht werden. Insbesondere durch eine dreidimensionale Formung kann so ein vorteilhafter Druckvorgang bereitgestellt werden.

Es wird ferner vorgeschlagen, dass der zumindest eine Druckkopf um und/oder entlang zumindest zwei Rotations- und/oder Translationsachsen bewegbar ausgebildet ist. Vorzugsweise ist der zumindest eine Druckkopf durch die Recheneinheit um und/oder entlang zumindest zwei Rotations- und/oder Translationsachsen bewegbar. Bevorzugt ist der zumindest eine Druckkopf um und/oder entlang zumindest drei Rotations- und/oder Translationsachsen, insbesondere entlang zumindest drei Translationsachsen, bewegbar ausgebildet. Besonders bevorzugt ist der zumindest eine Druckkopf um und/oder entlang zumindest fünf Rotations- und/oder Translationsachsen, insbesondere um zumindest fünf Rotationsachsen, bewegbar ausgebildet. Dadurch kann insbesondere der Druckkopf während eines Druckvorgangs bewegt werden, um einen vorteilhaften Auftrag von Druckmaterial gewährleisten zu können. Vorzugsweise kann dadurch insbesondere der Druckkopf relativ zu dem Aufnahmebereich bzw. der Druckbasis bewegt werden. Dadurch kann insbesondere eine vorteilhafte Zugänglichkeit des Druckkopfs an der Druckbasis erreicht werden. Insbesondere durch die dreidimensionale Formung kann so ein vorteilhafter Druckvorgang bereitgestellt werden.

Es wird weiter eine Basisdruckeinheit vorgeschlagen, welche dazu vorgesehen ist, die zumindest eine individuelle Druckbasis zu drucken. Die Basisdruckeinheit kann dabei insbesondere zumindest teilweise in den bestehenden Bauteilen integriert sein und Bauteile wie den zumindest einen Druckkopf und/oder die zumindest eine Recheneinheit ebenfalls nutzen oder separate Bauteile, wie einen separaten Druckkopf und/oder eine separate Recheneinheit, aufweisen. Vorzugsweise ist die Basisdruckeinheit dazu vorgesehen, die zumindest eine individuelle Druckbasis in den zumindest einen Aufnahmebereich der Dentaldruckvorrichtung zu drucken. Besonders bevorzugt wird die zumindest eine individuelle Druckbasis aus einem von dem Dentalobjekt differierenden Druckmaterial hergestellt. Unter einer "Basisdruckeinheit" soll in diesem Zusammenhang insbesondere eine Einheit verstanden werden, die dazu vorgesehen ist, eine individuelle Druckbasis zu drucken. Vorzugsweise soll darunter insbesondere eine Einheit verstanden werden, die zu einem 3D-Drucken, wie insbesondere in einem Rapid-Prototyping-Verfahren, einer individuellen Druckbasis vorgesehen ist. Dadurch kann insbesondere eine individuelle Druckbasis, die für einen Druck eines Dentalobjekts nötig ist, direkt in der Dentaldruckvorrichtung gedruckt werden. Dadurch kann insbesondere ein Zeitaufwand zur Herstellung eines Dentalobjekts gering gehalten werden.

Zudem geht die Erfindung aus von einem System mit einer Dentaldruckvorrichtung und zumindest einer individuellen Druckbasis, die in zumindest einem Aufnahmebereich der Dentaldruckvorrichtung aufgenommen ist.

Es wird vorgeschlagen, dass die zumindest eine individuelle Druckbasis zumindest teilweise von einem dentalen Positivabdruckmodell gebildet ist. Das dentale Positivabdruckmodell kann dabei sowohl in einem 3D-Druck als auch in einem manuellen Verfahren hergestellt sein. Vorzugsweise ist das dentale Positivabdruckmodell von einem positiven Gipsabdruck gebildet. Besonders bevorzugt ist das dentale Positivabdruckmodell von einem gehärteten positiven Gipsabdruck gebildet. Grundsätzlich sind jedoch auch andere, einem Fachmann als sinnvoll erscheinende Modellarten denkbar, wie beispielsweise in einem EBM-Verfahren hergestellte Modelle oder Kunststoffmodelle. Die Modelle können grundsätzlich konditioniert oder unkonditioniert sein. Unter einem "dentalen Positivabdruckmodell" soll in diesem Zusammenhang insbesondere eine dreidimensionale, materielle Abbildung zumindest eines Teils eines Gebisses verstanden werden. Das Originalgebiss kann dabei sowohl über einen Abdruck als auch durch ein Abscannen oder ein anderes, einem Fachmann als sinnvoll erscheinendes Erfassungsverfahren erfasst werden. Es sind verschiedene, einem Fachmann als sinnvoll erscheinende dentale Positivabdruckmodelle denkbar. Unter einem "Gebiss" soll dabei insbesondere eine Gesamtheit aus Kiefer und Zähnen verstanden werden. Dadurch kann ein Dentalobjekt insbesondere direkt auf ein Abbild eines Gebisses des Patienten gedruckt werden. Bei einem Druck kann dadurch insbesondere die Verwendung von Stützmaterial vermieden werden. Ferner kann dadurch ein Druck insbesondere vorteilhaft schnell realisiert werden.

Grundsätzlich wäre jedoch auch denkbar, dass die zumindest eine individuelle Druckbasis zumindest teilweise von einem Grundmodell gebildet ist. Vorzugsweise kann für die individuelle Druckbasis je nach zu druckendem Dentalobjekt zwischen verschiedenen Grundmodellen ausgewählt werden. Das Grundmodell ist dabei insbesondere dazu vorgesehen, eine Grundstruktur eines Gebisses darzustellen. Direkte patientenspezifische Strukturen bleiben unberücksichtigt. Hierbei können insbesondere patientenspezifische Strukturen des Originalgebisses, welche für das Drucken des Dentalobjekts nötig sind, in Form von Stützmaterial oder in anderer, einem Fachmann als sinnvoll erscheinender Form auf das Grundmodell aufgedruckt werden. Dadurch kann insbesondere eine Menge von Stützmaterial gering gehalten werden. Ferner kann auf eine patientenspezifische Druckbasis verzichtet werden und es wird lediglich eine begrenzte Anzahl von Grundmodellen benötigt.

Ferner geht die Erfindung von einem Erzeugnis, insbesondere einem Dentalobjekt, aus, das zumindest teilweise mittels einer Dentaldruckvorrichtung hergestellt ist, mit zumindest einem funktionellen Grundkörper. Das Erzeugnis kann dabei insbesondere sowohl von einem weiter zu verarbeitenden Zwischenprodukt als auch von einem fertigen Endprodukt gebildet sein. Vorzugsweise ist das fertige Endprodukt von einem fertigen Implantat, einem Provisorium oder einem anderen, einem Fachmann als sinnvoll erscheinenden Dentalobjekt gebildet. Besonders bevorzugt besteht das Erzeugnis, insbesondere bei einer Ausbildung als fertiges Endprodukt, zumindest teilweise aus einem Hochleistungskunststoff. Es sind verschiedene, einem Fachmann als sinnvoll erscheinende Hochleistungskunststoffe denkbar, wie beispielsweise Polyetheretherketon (PEEK). Grundsätzlich sind jedoch auch andere, einem Fachmann als sinnvoll erscheinende Materialien denkbar, wie beispielsweise Keramik-Wachs-Gemische oder Metallpulvergemische. Bei einer Ausbildung aus Keramik kann diese beispielsweise teilgehärtet und später in einem Ofen gesintert werden. Unter einem "Erzeugnis" soll in diesem Zusammenhang insbesondere ein Objekt verstanden werden, wie es von der Dentaldruckvorrichtung nachbearbeitungsfrei hergestellt ist. Das heißt insbesondere ein Objekt, wie es direkt aus der Dentaldruckvorrichtung kommt. Unter einem "funktionellen Grundkörper" soll in diesem Zusammenhang insbesondere ein Teil des Erzeugnisses verstanden werden, das bei einem endgültig fertiggestellten Endprodukt erhalten bleibt und insbesondere zu einer Funktion des Endprodukts beiträgt. Ferner soll in diesem Zusammenhang unter einem "Zwischenprodukt" insbesondere ein Erzeugnis verstanden werden, das insbesondere zu einer Weiterverarbeitung bestimmt ist. Das Erzeugnis kann dabei beispielsweise nachbehandelt, als eine Gussvorlage verwendet und/oder auf eine andere, einem Fachmann als sinnvoll erscheinende Weise weiterverarbeitet werden.

Es wird vorgeschlagen, dass der funktionelle Grundkörper zumindest 95 %, insbesondere wenigstens 98 % und vorzugsweise 99 %, eines Gesamtvolumens beträgt. Besonders bevorzugt beträgt der funktionelle Grundkörper 100 % des Gesamtvolumens des Erzeugnisses. Vorzugsweise ist das Erzeugnis zumindest annähernd stützmaterialfrei. Dadurch kann das Erzeugnis insbesondere zumindest annähernd nachbearbeitungsfrei weiterverarbeitet oder verwendet werden. Ein nachträgliches Entfernen von Stützmaterial kann vermieden werden. Insbesondere kann dadurch verhindert werden, dass nachträglich Bruchstellen von Stützmaterial entfernt bzw. abgeschliffen werden müssen. Ferner kann dadurch ein Materialverbrauch gering gehalten werden.

Des Weiteren geht die Erfindung von einem Verfahren zur Herstellung eines Erzeugnisses mittels einer Dentaldruckvorrichtung aus, mit zumindest einer individuellen Druckbasis, die zumindest eine individuell dreidimensional geformte Druckfläche aufweist, wobei das Erzeugnis direkt auf zumindest eine individuell dreidimensional geformte Druckfläche zumindest einer Druckbasis aufgedruckt wird.

Es wird vorgeschlagen, dass in einem Schritt der Druckkopf zumindest im Wesentlichen senkrecht zu einem direkt darunter liegenden Bereich der Druckfläche ausgerichtet ist. Das heißt insbesondere, dass in einem Schritt der Druckkopf zumindest im Wesentlichen parallel zu einer direkt darunter liegenden Flächennormalen der Druckfläche ausgerichtet ist. Unter "im Wesentlichen senkrecht" soll in diesem Zusammenhang insbesondere mit einem Winkel von 90° plus/minus 10°, vorzugsweise plus/minus 5°, besonders bevorzugt plus/minus 2°, verstanden werden. Dadurch kann insbesondere ein vorteilhafter und zuverlässiger Auftrag von Druckmaterial durch den Druckkopf auf die Druckbasis gewährleistet werden.

Ferner wird vorgeschlagen, dass in einem weiteren Schritt vor einem Druck ein adhäsives Trägermaterial auf die Druckfläche der Druckbasis aufgebracht wird. Vorzugsweise dient das adhäsive Trägermaterial dazu, das Dentalobjekt und/oder ein anderes Erzeugnis auf der Druckbasis während eines Drucks zu sichern. Bevorzugt wird das adhäsive Trägermaterial insbesondere über eine separate Düse aufgebracht. Die separate Düse kann dabei insbesondere direkt an dem Druckkopf angeordnet sein. Besonders bevorzugt ist das adhäsive Trägermaterial derart ausgestaltet, dass die adhäsiven Eigenschaften durch nachträgliche Behandlung, wie beispielsweise durch Hitze, insbesondere zum Lösen des fertigen Dentalprodukts und/oder eines anderen Erzeugnisses von der Druckbasis, aufgehoben werden können. Dadurch kann insbesondere verhindert werden, dass das Dentalobjekt und/oder ein anderes Erzeugnis während eines Drucks von der Druckbasis fällt oder verrutscht.

Grundsätzlich kann das adhäsive Trägermaterial auch in Form des Druckmaterials realisiert werden. Dabei wäre insbesondere denkbar, dass das Druckmaterial in einem angetrockneten Zustand beispielsweise eine zähe, klebrige Konsistenz aufweist und nach einer relativ langen Trocknungszeit, in der insbesondere ein Druckvorgang abgeschlossen werden kann, trocknet und seine adhäsiven Eigenschaften verliert.

Grundsätzlich wäre jedoch auch denkbar, das Dentalobjekt und/oder ein anderes Erzeugnis während eines Drucks durch eine intelligente Druckstrategie oder durch zusätzliches Andrucken temporärer Halteelemente auf der Druckbasis zu sichern.

Die erfindungsgemäße Dentaldruckvorrichtung, das erfindungsgemäße System, das erfindungsgemäße Erzeugnis sowie das erfindungsgemäße Verfahren sollen hierbei nicht auf die oben beschriebene Anwendung und Ausführungsform beschränkt sein. Insbesondere können die erfindungsgemäße Dentaldruckvorrichtung, das erfindungsgemäße System, das erfindungsgemäße Erzeugnis sowie das erfindungsgemäße Verfahren zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Dentaldruckvorrichtung mit einem beweglichen Druckkopf, mit einem Aufnahmebereich, mit einer in dem Aufnahmebereich aufgenommenen starren Druckbasis und mit einer Recheneinheit in einer schematischen Darstellung,
- Fig. 2: die erfindungsgemäße Dentaldruckvorrichtung während eines Druckvorgangs in einer schematischen Darstellung,
- Fig. 3: die erfindungsgemäße Dentaldruckvorrichtung nach einem Druckvorgang in einer schematischen Schnittdarstellung entlang der Schnittlinie III,
- Fig. 4: ein Ablaufdiagramm eines Verfahrens zur Herstellung eines Erzeugnisses mittels der erfindungsgemäßen Dentaldruckvorrichtung,
- Fig. 5: eine alternative erfindungsgemäße Dentaldruckvorrichtung mit einem beweglichen Druckkopf, mit einem Aufnahmebereich, mit einer in dem Aufnahmebereich aufgenommenen beweglichen Druckbasis und mit einer Recheneinheit in einer schematischen Darstellung,
- Fig. 6: die alternative erfindungsgemäße Dentaldruckvorrichtung während eines Druckvorgangs in einer schematischen Darstellung,
- Fig. 7: die alternative erfindungsgemäße Dentaldruckvorrichtung nach einem Druckvorgang in einer schematischen Schnittdarstellung entlang der Schnittlinie VI und
- Fig. 8: ein Ablaufdiagramm eines Verfahrens zur Herstellung eines Erzeugnisses mittels der alternativen erfindungsgemäßen Dentaldruckvorrichtung.

### Beschreibung der Ausführungsbeispiele

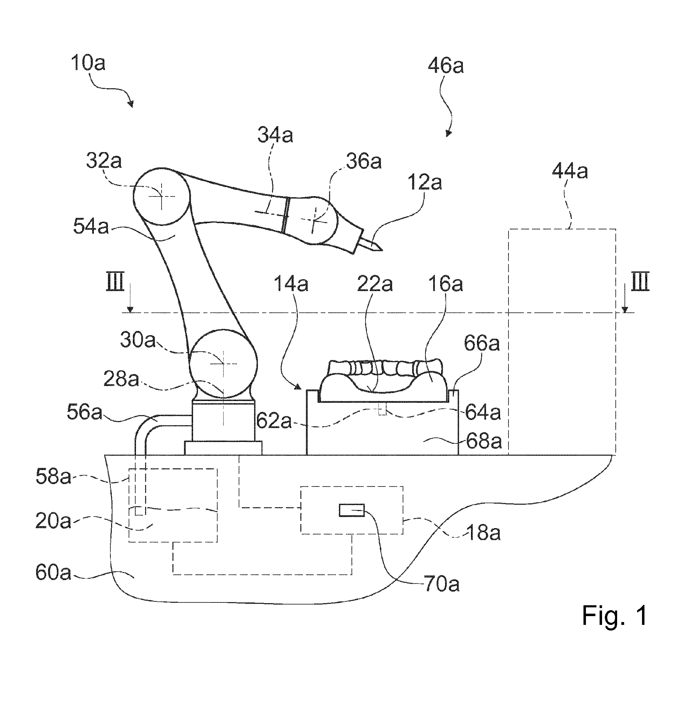

Die Figuren 1 zeigt eine erfindungsgemäße Dentaldruckvorrichtung 10a. Die Dentaldruckvorrichtung 10a ist von einer Vorrichtung zur Herstellung von dentalen Implantaten, Provisorien, Inlays und Zahnersatz gebildet. Die Dentaldruckvorrichtung 10a weist einen Druckkopf 12a auf. Ferner weist die Dentaldruckvorrichtung 10a einen Roboter 54a auf. Der Roboter 54a ist von einem Industrieroboter gebildet. Der Roboter 54a ist von einem Knickarmroboter gebildet. Grundsätzlich wären jedoch auch andere, einem Fachmann als sinnvoll erscheinende Industrieroboter und/oder Bewegungsautomaten, insbesondere aus dem Bereich der CAM ("Computer Aided Manufacturing"), denkbar. Der Roboter 54a weist fünf Rotationsachsen 28a, 30a, 32a, 34a, 36a auf. An einem freien Ende des Roboters 54a ist der Druckkopf 12a angeordnet. Der Druckkopf 12a ist über die Rotationsachsen 28a, 30a, 32a, 34a, 36a des Roboters 54a beweglich gelagert. Der Druckkopf 12a ist um die fünf Rotationsachsen 28a, 30a, 32a, 34a, 36a bewegbar ausgebildet. Der Druckkopf 12a ist nicht weiter sichtbar mit einer entlang dem Roboter 54a geführten Leitung 56a verbunden. Grundsätzlich wäre jedoch auch denkbar, dass die Leitung 56a innerhalb des Roboters 54a geführt ist. Die Leitung 56a ist zu einer Führung von Druckmaterial 20a zu dem Druckkopf 12a vorgesehen. An einem dem Druckkopf 12a abgewandten Ende der Leitung 56a ist die Leitung 56a mit einem Druckmaterialbehälter 58a verbunden. Der Druckmaterialbehälter 58a ist dazu vorgesehen, das Druckmaterial 20a aufzunehmen. In dem Druckmaterialbehälter 58a wird das Druckmaterial 20a auf einer kontanten Temperatur gehalten. Ferner wird aus dem Druckmaterialbehälter 58a bei Bedarf Druckmaterial 20a zu dem Druckkopf 12a gefördert. Der Druckmaterialbehälter 58a weist hierzu eine nicht weiter sichtbare Pumpe auf. Grundsätzlich wäre auch denkbar, dass die Dentaldruckvorrichtung 10a einen weiteren Druckmaterialbehälter 58a aufweist. Dadurch könnte insbesondere ein Drucken mit mehreren Materialien ermöglicht sein. Insbesondere könnte dadurch auch das zusätzliche Drucken von künstlichen Zähnen auf eine Prothesenbasis ermöglicht werden. Die Zähne könnten dadurch insbesondere aus einem anderen Material und/oder in einer anderen Farbe hergestellt werden, wie beispielsweise aus weißem Kunststoff oder weißer Keramik. Dadurch kann das Drucken von Totalprothesen ermöglicht werden. Der Druckkopf 12a weist einen schmalen zylindrischen Grundkörper mit einer kegelförmigen Spitze auf. Grundsätzlich sind jedoch auch andere, einem Fachmann als sinnvoll erscheinende Druckkopfformen denkbar. Grundsätzlich wäre eine Form mit einem breiten zylindrischen Grundkörper und einer kleinen, kegelförmigen Spitze, die insbesondere schmaler als der Grundkörper ist, denkbar. Dadurch können insbesondere auch interdentale Bereiche erreicht werden. In oder an dem Druckkopf 12a kann zusätzlich eine Auffahrsensierung integriert sein. Dadurch können gegebenenfalls Kollisionen mit der Druckbasis 16a vermieden werden. Der Roboter 54a mit dem Druckkopf 12a ist auf einer Grundeinheit 60a der Dentaldruckvorrichtung 10a angeordnet.

Ferner weist die Dentaldruckvorrichtung 10a einen Aufnahmebereich 14a auf. Der Aufnahmebereich 14a ist zu einer starren Aufnahme der individuellen Druckbasis 16a vorgesehen. In dem Aufnahmebereich 14a ist die individuelle Druckbasis 16a aufgenommen. Der Aufnahmebereich 14a nimmt die individuelle Druckbasis 16a auswechselbar auf. Die Druckbasis 16a weist eine individuell dreidimensional geformte Druckfläche 22a auf. Die Druckfläche 22a bildet dabei eine Oberfläche eines Gebisses ab. Die individuelle Druckbasis 16a ist von einem dentalen Positivabdruckmodell gebildet. Die individuelle Druckbasis 16a ist von einem Gipsmodell gebildet. Grundsätzlich sind jedoch auch andere Ausgestaltungen und Materialien der individuellen Druckbasis 16a denkbar. Grundsätzlich wäre jedoch auch denkbar, dass die individuelle Druckbasis 16a von einem Grundmodell gebildet ist. Die individuelle Druckbasis 16a weist dazu auf einer der Druckfläche 22a gegenüberliegenden Unterseite einen rechteckigen Fortsatz 62a auf, der in eine Ausnehmung 64a des Aufnahmebereichs 14a eingreift. Ferner ist die Druckbasis 16a zu einer Positionssicherung von einer Wandung 66a des Aufnahmebereichs 14a umgeben und begrenzt. Der Aufnahmebereich 14a ist Teil eines Aufnahmeblocks 68a. Der Aufnahmeblock 68a ist auf der Grundeinheit 60a der Dentaldruckvorrichtung 10a angeordnet. Grundsätzlich sind jedoch auch andere, einem Fachmann als sinnvoll erscheinende Vorrichtungen zur Positionssicherung der Druckbasis 16a denkbar. Insbesondere wären dabei Vorrichtungen denkbar, welche die Druckbasis 16a über mechanische Haltesysteme, wie beispielsweise Federklemmen und/oder Schnellspannsysteme und/oder Klettverschlüsse und/oder Rastsysteme, sichern. Zudem oder alternativ wäre auch denkbar, dass die Druckbasis 16a pneumatisch durch das Erzeugen eines Unterdrucks an einer Unterseite der Druckbasis 16a gesichert wird. Dabei könnte insbesondere auf eine besondere Ausgestaltung der Druckbasis 16a an einer Unterseite verzichtet werden. Ferner können verschiedene Größen von Druckbasen aufgenommen werden.

Die Dentaldruckvorrichtung 10a und die Druckbasis 16a bilden ein System 46a.

Des Weiteren weist die Dentaldruckvorrichtung 10a eine Recheneinheit 18a auf. Die Recheneinheit 18a ist in der Grundeinheit 60a der Dentaldruckvorrichtung 10a angeordnet. Ferner ist die Recheneinheit 18a zu einer Steuerung des zumindest einen Druckkopfs 12a zu einem Aufbringen von Druckmaterial 20a auf die individuell dreidimensional geformte Druckfläche 22a der Druckbasis 16a vorgesehen ist. Die Recheneinheit 18a ist dazu vorgesehen, den Roboter 54a sowie den Druckmaterialbehälter 58a derart anzusteuern, dass über den Druckkopf 12a Druckmaterial 20a auf die Druckfläche 22a aufgebracht werden kann. Der Roboter 54a wird von der Recheneinheit 18a zu einer Bewegung des Druckkopfs 12a angesteuert. Der Druckmaterialbehälter 58a wird von der Recheneinheit 18a zu einer Förderung von Druckmaterial 20a zu dem Druckkopf 12a angesteuert. Die Recheneinheit 18a weist ferner eine Schnittstelle 70a auf. Die Schnittstelle 70a ist von einer USB-Schnittstelle gebildet. Grundsätzlich sind jedoch auch andere, einem Fachmann als sinnvoll erscheinende drahtgebundene oder drahtlose Schnittstellen denkbar.

Grundsätzlich wäre denkbar, dass die Dentaldruckvorrichtung 10a ferner eine Basisdruckeinheit 44a aufweist, wie in der Figur 1 gestrichelt dargestellt. Die Basisdruckeinheit 44a weist dabei einen nicht näher dargestellten Roboter auf, der entsprechend dem Roboter 54a der Dentaldruckvorrichtung 10a ausgebildet ist. Ferner weist die Basisdruckeinheit 44a dabei insbesondere eine nicht weiter dargestellte Recheneinheit sowie einen nicht näher dargestellten Druckmaterialbehälter auf. Die Basisdruckeinheit 44a ist dabei insbesondere entsprechend dem Roboter 54a, der Recheneinheit 18a und dem Druckmaterialbehälter 58a der Dentaldruckvorrichtung 10a ausgebildet. Grundsätzlich wäre jedoch auch eine andere, einem Fachmann als sinnvoll erscheinende Ausgestaltung denkbar. Ferner wäre grundsätzlich auch möglich, dass die Basisdruckeinheit 44a in dem Roboter 54a, der Recheneinheit 18a und dem Druckmaterialbehälter 58a der Dentaldruckvorrichtung 10a integriert ist und lediglich ein anderes Druckmaterial verwendet wird. Die Basisdruckeinheit 44a ist dabei dazu vorgesehen, die individuelle Druckbasis 16a zu drucken. Die individuelle Druckbasis 16a kann grundsätzlich von der Basisdruckeinheit 44a direkt in den Aufnahmebereich 14a gedruckt werden. Dazu muss vor einem Druck die Form des Gebisses eines Patienten über einen 3D-Scanner aufgenommen und an die Basisdruckeinheit 44a übertragen werden.

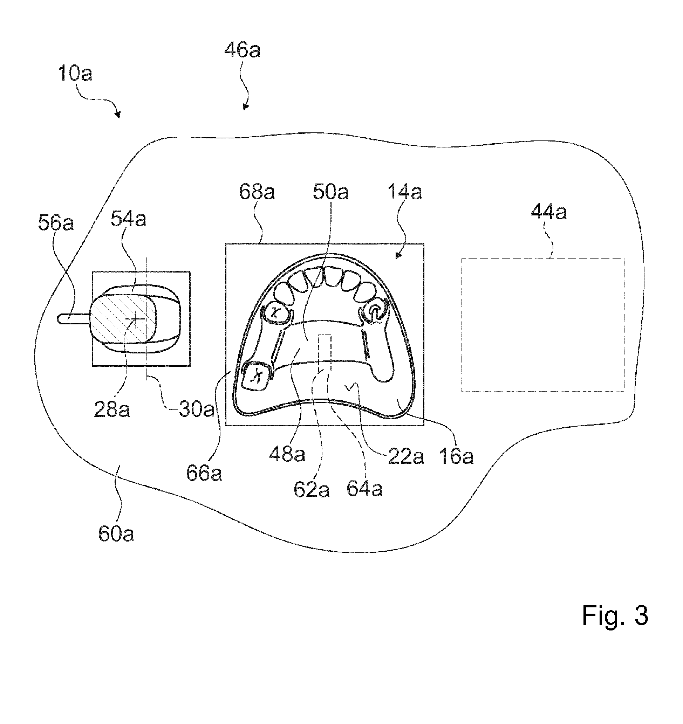

Die Dentaldruckvorrichtung 10a ist zu einer Herstellung eines Erzeugnisses 48a vorgesehen. Das Erzeugnis 48a ist von einem Dentalobjekt gebildet. Ein Verfahren zur Herstellung des Erzeugnisses 48a erfolgt mittels der Dentaldruckvorrichtung 10a. Bei dem Verfahren wird das Erzeugnis 48a direkt auf die individuell dreidimensional geformte Druckfläche 22a der Druckbasis 16a aufgedruckt (Figur 3).

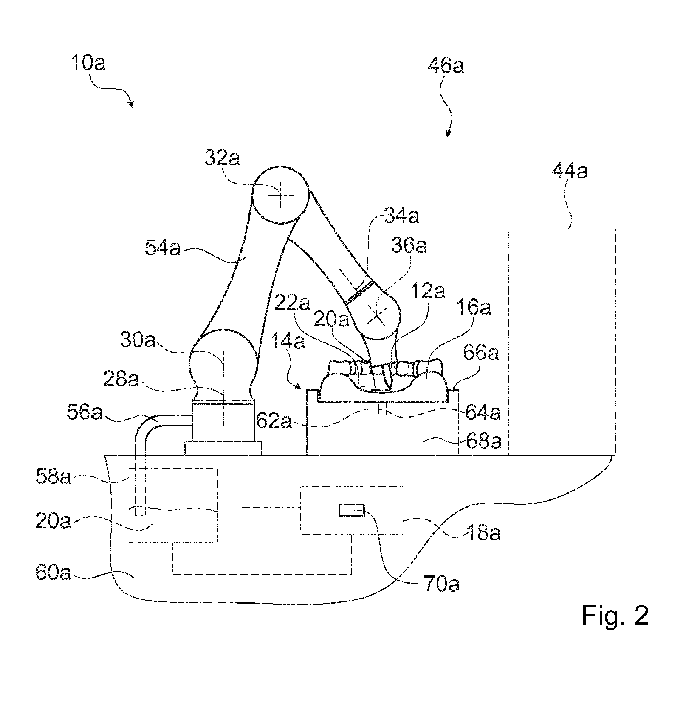

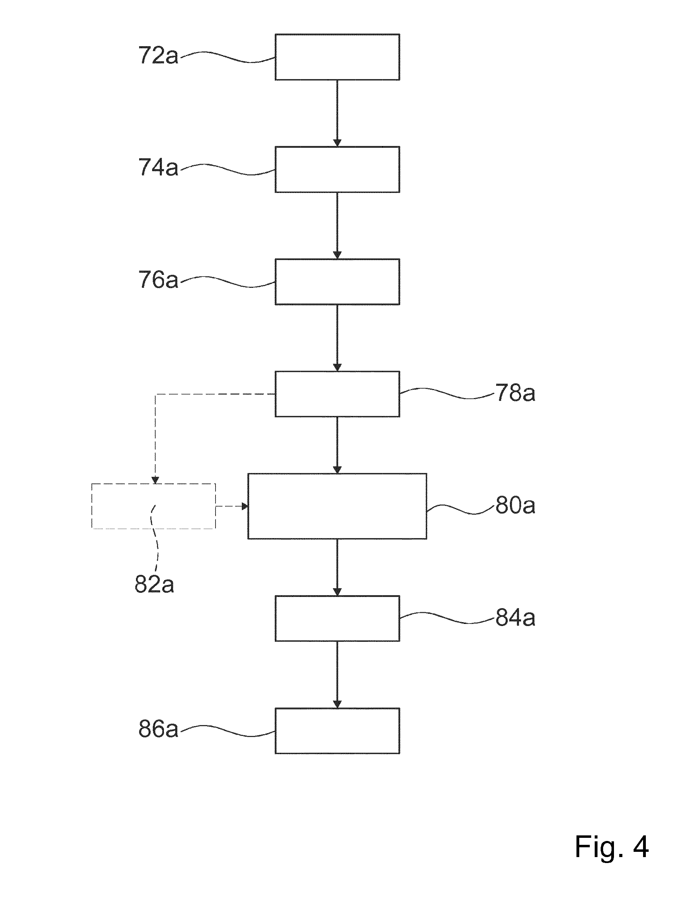

Bei dem Verfahren wird in einem ersten Schritt 72a über eine nicht weiter sichtbare Scanneinheit der Dentaldruckvorrichtung 10a die Druckbasis 16a dreidimensional eingescannt. Grundsätzlich kann eine Sensorik zu einem Scannen in dem Druckkopf 12a integriert sein. Dabei könnte die Sensorik zudem zur Aufnahme weiterer Daten genutzt werden. Ferner kann grundsätzlich ein Scannen auch durch ein externes Gerät erfolgen. Anschließend kann in einem weiteren Schritt 74a ein erzeugtes CAD-Modell der Druckbasis 16a über die Schnittstelle 70a auf ein nicht weiter sichtbares externes Gerät wie insbesondere einen Computer übertragen werden. An dem externen Gerät kann nun in einem weiteren Schritt 76a über eine CAD-Software virtuell ein gewünschtes Dentalobjekt in das CAD-Modell konstruiert werden. Grundsätzlich wäre hierbei denkbar, dass in der CAD-Software bereits Standardobjekte ausgewählt werden können und lediglich eine Anpassung an die Druckbasis 16a erfolgen muss. In einem weiteren Schritt 78a wird ein CAD-Modell des Dentalobjekts sowie eine Lageinformation relativ zu der Druckbasis 16a über die Schnittstelle 70a auf die Dentaldruckvorrichtung 10a übertragen. Anschließend beginnt in einem weiteren Schritt 80a ein Druckvorgang. Dabei steuert die Recheneinheit 18a den Roboter 54a und den Druckmaterialbehälter 58a zu einem Auftrag von Druckmaterial 20a auf der Druckbasis 16a. Die Recheneinheit 18a steuert den Roboter 54a und den Druckmaterialbehälter 58a zu einem Drucken eines Erzeugnisses 48a, entsprechend dem CAD-Modell des Dentalobjekts, auf die Druckfläche 22a der Druckbasis 16a. Das Erzeugnis 48a wird dabei direkt auf die Druckbasis 16a gedruckt. Grundsätzlich wird, wenn die Druckbasis 16a von einem Grundmodell gebildet ist, vor einem eigentlichen Druckvorgang in einem vorgeschalteten Schritt 82a eine Stützstruktur auf die Druckbasis 16a aufgebracht. Grundsätzlich kann die Stützstruktur auch während eines Druckvorgangs parallel gedruckt werden. Die Recheneinheit 18a steuert zu einem Auftrag von Druckmaterial 20a indirekt den Druckkopf 12a. Die Recheneinheit 18a berechnet sich hierfür ständig eine aktuelle Ausrichtung und Position des Druckkopfs 12a. Das Druckmaterial 20a wird während des Druckvorgangs schichtweise auf die Druckfläche 22a der Druckbasis 16a aufgebracht. Die Schichten verlaufen dabei parallel zu der Druckfläche 22a der Druckbasis 16a. Je nach Schichtdicke können so auch Fehler in der Druckbasis 16a kompensiert werden. Grundsätzlich wäre jedoch auch denkbar, dass die Schichten jeweils parallel zu einer Ebene, wie insbesondere einer Untergrundebene, erzeugt werden. Das Erzeugnis 48a wird von der Dentaldruckvorrichtung 10a schichtweise erzeugt. In dem Schritt 80a, während des Druckvorgangs, ist der Druckkopf 12a zumindest während eines Auftrags von Druckmaterial 20a senkrecht zu dem direkt darunter liegenden Bereich der Druckfläche 22a ausgerichtet. Die Recheneinheit 18a verfolgt dabei insbesondere eine intelligente Druckstrategie, durch welche ein Verrutschen des Erzeugnisses 48a verhindert werden soll. Ein Auftrag der Schichten wird dabei von der Recheneinheit 18a immer von einem tiefen, sicheren Punkt begonnen. Grundsätzlich wäre jedoch auch denkbar, dass durch die Recheneinheit 18a temporäre Halteelemente gedruckt werden, die dazu vorgesehen sind, das Erzeugnis 48a während eines Drucks zu sichern. Die Halteelemente könnten dabei anschließend beispielsweise abgebrochen, abgeschliffen oder dergleichen werden. Nach einem Druckvorgang wird das Erzeugnis 48a in einem weiteren Schritt 84a gegebenenfalls getrocknet. Eine Trocknung kann aktiv oder passiv erfolgen. Anschließend kann das fertige Erzeugnis 48a entnommen werden. Gegebenenfalls kann hier eine Isolierung auf der Druckbasis 16a vorteilhaft sein, um eine Abnehmbarkeit gewährleisten zu können. Dies kann grundsätzlich über ein nicht weiter sichtbares Handlingsystem erfolgen. Über ein solches Handlingsystem kann zudem die Dentaldruckvorrichtung 10a auch beladen werden. Beispielsweise kann die Druckbasis 16a oder das Erzeugnis 48a über ein solches Handlingsystem bewegt werden. Ferner kann durch ein Handlingsystem beispielsweise erreicht werden, dass besonders kleine und komplexe Teile außerhalb der Druckbasis 16a gedruckt werden können und später über das Handlingsystem wieder auf der Druckbasis 16a eingesetzt werden können. Alternativ oder zusätzlich können schwierige Teilstücke auch manuell von einem Bediener hergestellt und/oder eingesetzt werden. In einem weiteren Schritt 86a kann das Erzeugnis 48a weiterverarbeitet bzw. nachbearbeitet werden. Je nach Oberflächenqualität des Erzeugnisses 48a kann das Erzeugnis 48a nachträglich noch geschliffen werden (Figuren 2, 3, 4).

Das Erzeugnis 48a ist von einer Prothesenbasis gebildet. Ferner ist das Erzeugnis 48a von einem Zwischenprodukt gebildet, das nach einem Druck weiterverarbeitet wird. Das Erzeugnis 48a wird nach einem Druck mit Kunststoff umschlossen. In den Kunststoff werden anschließend künstliche Zähne eingebettet. Grundsätzlich sind jedoch auch andere Erzeugnisse denkbar. Das Erzeugnis 48a weist einen funktionellen Grundkörper 50a auf. Der funktionelle Grundkörper 50a beträgt 100% eines Gesamtvolumens des Erzeugnisses 48a. Das Erzeugnis 48a ist vollständig von dem funktionellen Grundkörper 50a gebildet. Das Erzeugnis 48a, wie es aus der Dentaldruckvorrichtung 10a kommt, ist folglich vollständig stützmaterialfrei (Figur 3).

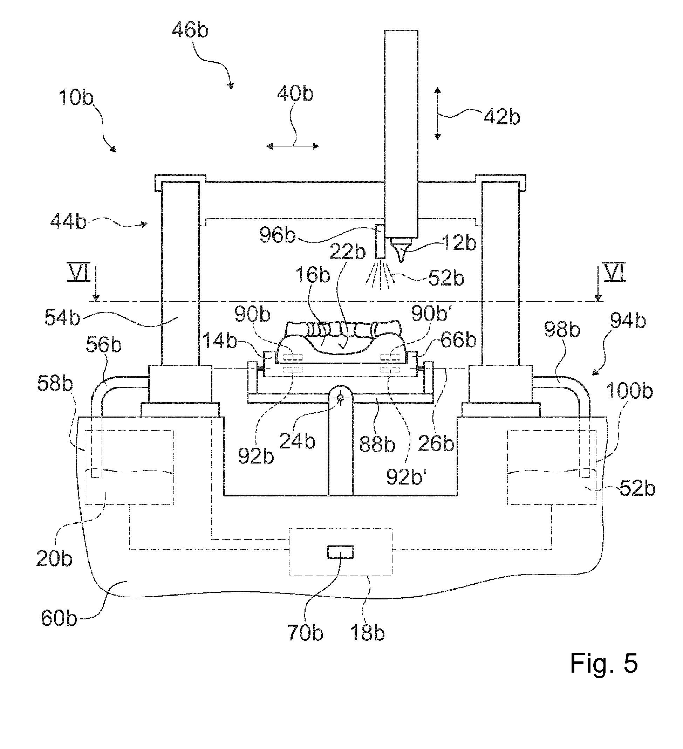

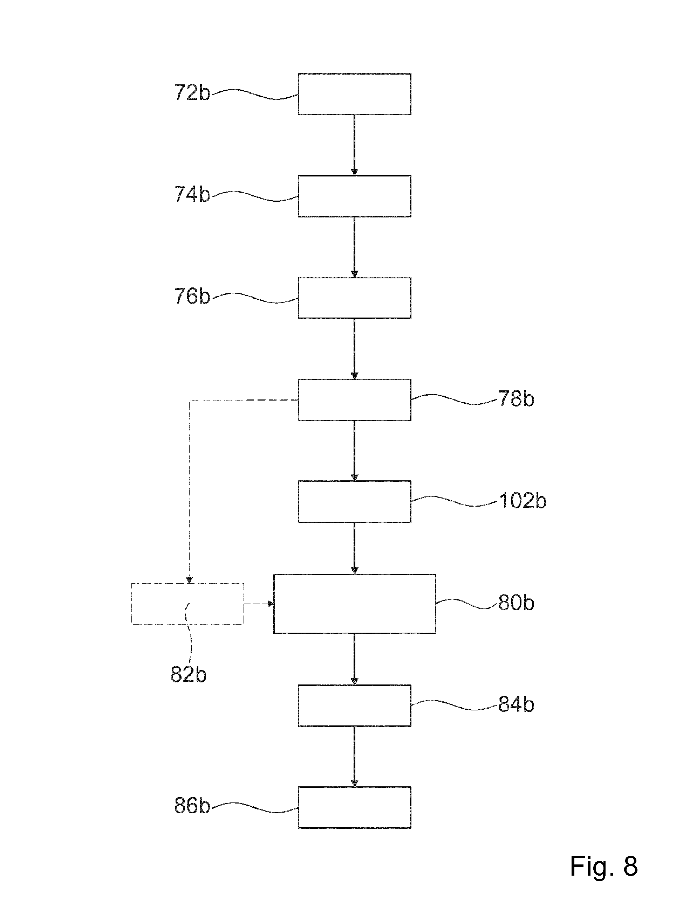

In den Figuren 5 bis 8 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 4 verwiesen werden kann. Zur Unterscheidung der Ausführungsbeispiele ist der Buchstabe a in den Bezugszeichen des Ausführungsbeispiels in den Figuren 1 bis 4 durch den Buchstaben b in den Bezugszeichen des Ausführungsbeispiels der Figuren 5 bis 8 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 4 verwiesen werden.

Die Figur 5 zeigt eine alternative erfindungsgemäße Dentaldruckvorrichtung 10b. Die Dentaldruckvorrichtung 10b ist von einer Vorrichtung zur Herstellung von dentalen Implantaten, Provisorien, Inlays und Zahnersatz gebildet. Die Dentaldruckvorrichtung 10a weist einen Druckkopf 12b auf. Ferner weist die Dentaldruckvorrichtung 10b einen Roboter 54b auf. Der Roboter 54b ist von einem Industrieroboter gebildet. Der Roboter 54b ist von einem Portalroboter gebildet. Grundsätzlich wären jedoch auch andere, einem Fachmann als sinnvoll erscheinende Industrieroboter und/oder Bewegungsautomaten, insbesondere aus dem Bereich der CAM ("Computer Aided Manufacturing"), denkbar. Der Roboter 54b weist drei Translationsachsen 38b, 40b, 42b auf. An einem über die drei Translationsachsen 38b, 40b, 42b beweglichen Teil des Roboters 54b ist der Druckkopf 12b angeordnet. Der Druckkopf 12b ist über die Translationsachsen 38b, 40b, 42b des Roboters 54b beweglich gelagert. Der Druckkopf 12b ist entlang der drei Translationsachsen 38b, 40b, 42b bewegbar ausgebildet. Der Roboter 54b mit dem Druckkopf 12b ist auf einer Grundeinheit 60b der Dentaldruckvorrichtung 10b angeordnet.

Ferner weist die Dentaldruckvorrichtung 10b einen Aufnahmebereich 14b auf. Der Aufnahmebereich 14b ist zu einer beweglichen Aufnahme einer individuellen Druckbasis 16b vorgesehen. In dem Aufnahmebereich 14b ist eine individuelle Druckbasis 16b aufgenommen. Der Aufnahmebereich 14b nimmt die individuelle Druckbasis 16b auswechselbar auf. Der Aufnahmebereich 14b ist gegenüber der Grundeinheit 60b der Dentaldruckvorrichtung 10b beweglich gelagert. Der Aufnahmebereich 14b ist um zwei Rotationsachsen 24b, 26b bewegbar ausgebildet. Der Aufnahmebereich 14b ist über einen Rahmen 88b beweglich gelagert. Der Rahmen 88b ist um die Rotationsachse 24b gegenüber der Grundeinheit 60b der Dentaldruckvorrichtung 10b drehbar gelagert. Der Aufnahmebereich 14b ist wiederum gegenüber dem Rahmen 88b um die Rotationsachse 24b drehbar gelagert. Die Rotationsachse 24b ist gegenüber der Rotationsachse 26b senkrecht ausgerichtet. Die individuelle Druckbasis 16b weist zu einer Sicherung auf einer der Druckfläche 22b gegenüberliegenden Unterseite zwei magnetische Elemente 90b, 90b' auf. Die magnetischen Elemente 90b, 90b' sind in einem Grundkörper der individuellen Druckbasis 16b integriert. Der Aufnahmebereich 14b weist auf einer gegenüberliegenden Seite integriert Elektromagnete 92b, 92b' auf. Über die Elektromagnete 92b, 92b' können die magnetischen Elemente 90b, 90b' und damit auch die gesamte Druckbasis 16b in dem Aufnahmebereich 14b fixiert werden. Grundsätzlich sind jedoch auch andere, einem Fachmann als sinnvoll erscheinende Vorrichtungen zur Positionssicherung der Druckbasis 16b denkbar. Insbesondere wären dabei Vorrichtungen denkbar, welche die Druckbasis 16b über mechanische Haltesysteme, wie beispielsweise Federklemmen und/oder Schnellspannsysteme und/oder Klettverschlüsse und/oder Rastsysteme sichern. Zudem oder alternativ wäre auch denkbar, dass die Druckbasis 16b pneumatisch durch das Erzeugen eines Unterdrucks an einer Unterseite der Druckbasis 16b gesichert wird. Dabei könnte insbesondere auf eine besondere Ausgestaltung der Druckbasis 16b an einer Unterseite verzichtet werden. Ferner können verschiedene Größen von Druckbasen aufgenommen werden.

Die Dentaldruckvorrichtung 10b und die Druckbasis 16b bilden ein System 46b.

Ferner weist die Dentaldruckvorrichtung 10b eine Adhäsionseinheit 94b auf. Die Adhäsionseinheit 94b ist dazu vorgesehen, adhäsives Trägermaterial 52b vor einer Bedruckung auf die Druckbasis 16b aufzubringen. Die Adhäsionseinheit 94b weist eine Düse 96b auf, über welche das adhäsive Trägermaterial 52b direkt auf die Druckbasis 16b aufgebracht wird. Die Düse 96b ist direkt neben dem Druckkopf 12b an dem Roboter 54b angeordnet. Die Düse 96b ist nicht weiter sichtbar mit einer, entlang dem Roboter 54b geführten Leitung 98b verbunden. Grundsätzlich wäre jedoch auch denkbar, dass die Leitung 98b innerhalb des Roboters 54b geführt ist. Die Leitung 98b ist zu einer Führung von Trägermaterial 52b zu der Düse 96b vorgesehen. An einem der Düse 96b abgewandten Ende der Leitung 98b ist die Leitung 98b mit einem Trägermaterialbehälter 100b verbunden. Der Trägermaterialbehälter 100b ist dazu vorgesehen, das adhäsive Trägermaterial 52b aufzunehmen. Aus dem Trägermaterialbehälter 100b wird bei Bedarf adhäsives Trägermaterial 52b zu der Düse 96b gefördert. Der Trägermaterialbehälter 100b weist hierzu eine nicht weiter sichtbare Pumpe auf. Das adhäsive Trägermaterial 52b ist von einem Klebstoff gebildet.

Des Weiteren weist die Dentaldruckvorrichtung 10b eine Recheneinheit 18b auf. Die Recheneinheit 18b ist in der Grundeinheit 60b der Dentaldruckvorrichtung 10b angeordnet. Ferner ist die Recheneinheit 18b zu einer Steuerung des zumindest einen Druckkopfs 12b zu einem Aufbringen von Druckmaterial 20b auf die individuell dreidimensional geformte Druckfläche 22b der Druckbasis 16b vorgesehen ist. Die Recheneinheit 18b ist dazu vorgesehen, den Roboter 54b, einen Druckmaterialbehälter 58b, den Trägermaterialbehälter 100b, sowie den Aufnahmebereich 14b und den Rahmen 88b derart anzusteuern, dass über den Druckkopf 12b Druckmaterial 20b auf die Druckfläche 22b aufgebracht werden kann. Der Roboter 54b wird von der Recheneinheit 18b zu einer Bewegung des Druckkopfs 12b angesteuert. Über den Aufnahmebereich 14b mit dem Rahmen 88b wird die Druckbasis 16b relativ zu dem Roboter 54b bewegt. Der Druckmaterialbehälter 58b wird von der Recheneinheit 18b zu einer Förderung von Druckmaterial 20b zu dem Druckkopf 12b angesteuert. Der Trägermaterialbehälter 100b wird von der Recheneinheit 18b zu einer Förderung von adhäsivem Trägermaterial 52b zu der Düse 96b angesteuert.

Grundsätzlich wäre denkbar, dass die Dentaldruckvorrichtung 10b ferner eine Basisdruckeinheit 44b aufweist, wie in der Figur 5 gestrichelt dargestellt. Die Basisdruckeinheit 44b ist dabei in den bestehenden Roboter 54b sowie die bestehende Recheneinheit 18b integriert. Ferner weist die Basisdruckeinheit 44b einen nicht näher dargestellten Druckmaterialbehälter auf. Die Basisdruckeinheit 44b ist dabei dazu vorgesehen, die individuelle Druckbasis 16b zu drucken. Die individuelle Druckbasis 16b kann grundsätzlich von der Basisdruckeinheit 44b direkt in den Aufnahmebereich 14b gedruckt werden. Dazu muss vor einem Druck die Form des Gebisses eines Patienten über einen 3D-Scanner aufgenommen und an die Basisdruckeinheit 44b übertragen werden.

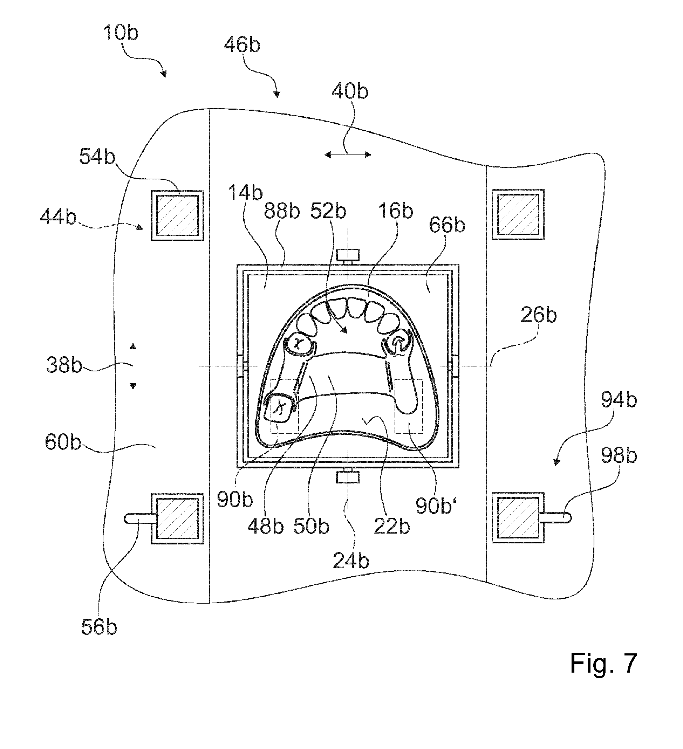

Die Dentaldruckvorrichtung 10b ist zu einer Herstellung eines Erzeugnisses 48b vorgesehen. Das Erzeugnis 48b ist von einem Dentalobjekt gebildet. Ein Verfahren zur Herstellung des Erzeugnisses 48b erfolgt mittels der Dentaldruckvorrichtung 10b. Bei dem Verfahren wird das Erzeugnis 48b direkt auf die individuell dreidimensional geformte Druckfläche 22b der Druckbasis 16b aufgedruckt (Figur 7).

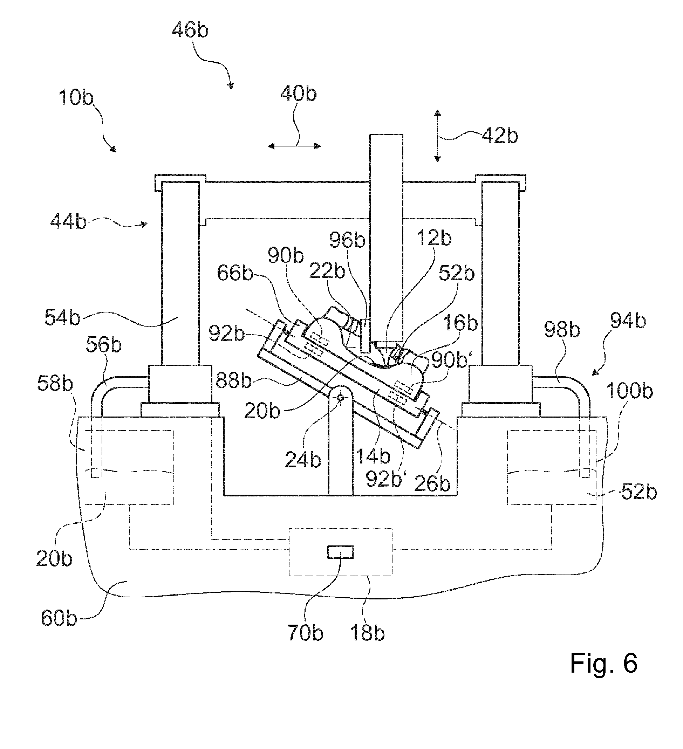

Bei dem Verfahren wird in einem ersten Schritt 72b über eine nicht weiter sichtbare Scanneinheit der Dentaldruckvorrichtung 10b die Druckbasis 16b dreidimensional eingescannt. Grundsätzlich kann eine Sensorik zu einem Scannen in dem Druckkopf 12b integriert sein. Dabei könnte die Sensorik zudem zur Aufnahme weiterer Daten genutzt werden. Ferner kann grundsätzlich ein Scannen auch durch ein externes Gerät erfolgen. Anschließend kann in einem weiteren Schritt 74b ein erzeugtes CAD-Modell der Druckbasis 16b über eine Schnittstelle 70b der Recheneinheit 18b auf ein nicht weiter sichtbares externes Gerät, wie insbesondere einen Computer, übertragen werden. An dem externen Gerät kann nun in einem weiteren Schritt 76b über eine CAD-Software virtuell ein gewünschtes Dentalobjekt in das CAD-Modell konstruiert werden. Grundsätzlich wäre hierbei denkbar, dass in der CAD-Software bereits Standardobjekte ausgewählt werden können und lediglich eine Anpassung an die Druckbasis 16b erfolgen muss. In einem weiteren Schritt 78b wird ein CAD-Modell des Dentalobjekts sowie eine Lageinformation relativ zu der Druckbasis 16b über die Schnittstelle 70b auf die Dentaldruckvorrichtung 10b übertragen. Anschließend wird in einem weiteren Schritt 102b adhäsives Trägermaterial 52b auf die Druckbasis 16b aufgebracht. Die Recheneinheit 18b steuert zu einem Auftrag von adhäsivem Trägermaterial 52b über den Roboter 54b indirekt die Düse 96b. Ferner steuert die Recheneinheit 18b hierfür den Trägermaterialbehälter 100b an, um von dort Trägermaterial 52b zu der Düse 96b zu fördern. Anschließend beginnt in einem weiteren Schritt 80b ein Druckvorgang. Dabei steuert die Recheneinheit 18b den Roboter 54b, den Druckmaterialbehälter 58b und den Aufnahmebereich 14b zu einem Auftrag von Druckmaterial 20b auf die Druckbasis 16b. Die Recheneinheit 18b steuert den Roboter 54b, den Druckmaterialbehälter 58b und den Aufnahmebereich 14b zu einem Drucken eines Erzeugnisses 48b, entsprechend dem CAD-Modell des Dentalobjekts, auf die Druckfläche 22b der Druckbasis 16b. Das Erzeugnis 48b wird dabei direkt auf die Druckbasis 16b gedruckt. Grundsätzlich wird, wenn die Druckbasis 16b von einem Grundmodell gebildet ist, vor einem eigentlichen Druckvorgang in einem vorgeschalteten Schritt 82b eine Stützstruktur auf die Druckbasis 16b aufgebracht. Grundsätzlich kann die Stützstruktur auch während eines Druckvorgangs parallel gedruckt werden. Die Recheneinheit 18b steuert zu einem Auftrag von Druckmaterial 20b indirekt den Druckkopf 12b. Die Recheneinheit 18b berechnet sich hierfür ständig eine aktuelle Ausrichtung und Position des Druckkopfs 12b. Ferner steuert die Recheneinheit 18b ständig eine Ausrichtung des Aufnahmebereichs 14b. Die Recheneinheit 18b richtet den Aufnahmebereich 14b relativ zu dem Druckkopf 12b aus. Ferner steuert die Recheneinheit 18b die Elektromagneten 92b, 92b' des Aufnahmebereichs 14b an. Diese werden zu einer Sicherung der Druckbasis 16b angesteuert. Je nach Lage des Aufnahmebereichs 14b muss die Druckbasis 16b gegebenenfalls gesichert werden, um ein Herausfallen zu vermeiden. Das Druckmaterial 20b wird während des Druckvorgangs schichtweise auf die Druckfläche 22b der Druckbasis 16b aufgebracht. Die Schichten verlaufen dabei parallel zu der Druckfläche 22b der Druckbasis 16b. Grundsätzlich wäre jedoch auch denkbar, dass die Schichten jeweils parallel zu einer Ebene, wie insbesondere einer Untergrundebene, erzeugt werden. Das Erzeugnis 48b wird von der Dentaldruckvorrichtung 10b schichtweise erzeugt. In dem Schritt 80b, während des Druckvorgangs, ist der Druckkopf 12b zumindest während eines Auftrags von Druckmaterial 20b senkrecht zu dem direkt darunter liegenden Bereich der Druckfläche 22b ausgerichtet. Die Ausrichtung des Druckkopfs 12b zu der Druckfläche 22b wird über eine Neigung des Aufnahmebereichs 14b eingestellt. Durch das aufgebrachte adhäsive Trägermaterial 52b kann das Erzeugnis 48b während des Drucks weder herunterfallen noch verrutschen. Nach einem Druckvorgang wird das Erzeugnis 48b in einem weiteren Schritt 84b getrocknet. Eine Trocknung kann aktiv oder passiv erfolgen. Bei der Trocknung trocknet das adhäsive Trägermaterial 52b aus und verliert dadurch seine adhäsiven Eigenschaften. Grundsätzlich kann das adhäsive Trägermaterial 52b nach einer Trocknung eine isolierende Wirkung aufweisen, um ein vorteilhaftes Ablösen zu gewährleisten. Dadurch wird das Erzeugnis 48b von der Druckbasis 16b frei. Anschließend kann das fertige Erzeugnis 48b entnommen werden. Dies kann grundsätzlich über ein nicht weiter sichtbares Handlingsystem erfolgen. Über ein solches Handlingsystem kann zudem die Dentaldruckvorrichtung 10b auch beladen werden. Beispielsweise kann die Druckbasis 16b oder das Erzeugnis 48b über ein solches Handlingsystem bewegt werden. Ferner kann durch ein Handlingsystem beispielsweise erreicht werden, dass besonders kleine und komplexe Teile außerhalb der Druckbasis 16b gedruckt werden können und später über das Handlingsystem wieder auf der Druckbasis 16b eingesetzt werden können. Alternativ oder zusätzlich können schwierige Teilstücke auch manuell von einem Bediener hergestellt und/oder eingesetzt werden. In einem weiteren Schritt 86b kann das Erzeugnis 48b weiterverarbeitet bzw. nachbearbeitet werden. Je nach Oberflächenqualität des Erzeugnisses 48b kann das Erzeugnis 48b nachträglich noch geschliffen werden (Figuren 6, 7, 8).

## Patentansprüche

1. Dentaldruckvorrichtung mit zumindest einem Druckkopf (12a; 12b), mit zumindest einem Aufnahmebereich (14a; 14b) zur Aufnahme zumindest einer individuellen Druckbasis (16a; 16b) und mit zumindest einer Recheneinheit (18a; 18b), die zu einer Steuerung des zumindest einen Druckkopfs (12a; 12b) und/oder des zumindest einen Aufnahmebereichs (14a; 14b) zu einem Aufbringen von Druckmaterial (20a; 20b) auf zumindest eine individuell dreidimensional geformte Druckfläche (22a; 22b) der zumindest einen Druckbasis (16a; 16b) vorgesehen ist.

2. Dentaldruckvorrichtung nach Anspruch 1,
**dadurch gekennzeichnet, dass**
der zumindest eine Aufnahmebereich (14a; 14b) dazu vorgesehen ist, die individuelle Druckbasis (16a; 16b) auswechselbar aufzunehmen.

3. Dentaldruckvorrichtung nach Anspruch 1 oder 2,
**dadurch gekennzeichnet, dass**
der zumindest eine Aufnahmebereich (14b) um und/oder entlang zumindest zwei Rotations- und/oder Translationsachsen (24b, 26b) bewegbar ausgebildet ist.

4. Dentaldruckvorrichtung nach einem der vorhergehenden Ansprüche,
**dadurch gekennzeichnet, dass**
der zumindest eine Druckkopf (12a; 12b) um und/oder entlang zumindest zwei Rotations- und/oder Translationsachsen (28a, 30a, 32a, 34a, 36a; 38b, 40b, 42b) bewegbar ausgebildet ist.

5. Dentaldruckvorrichtung nach einem der vorhergehenden Ansprüche,
**gekennzeichnet durch**
eine Basisdruckeinheit (44a; 44b), welche dazu vorgesehen ist, die zumindest eine individuelle Druckbasis (16a; 16b) zu drucken.

6. System mit einer Dentaldruckvorrichtung (10a; 10b) nach einem der vorhergehenden Ansprüche und zumindest einer individuellen Druckbasis (16a; 16b), die in zumindest einem Aufnahmebereich (14a; 14b) der Dentaldruckvorrichtung (10a; 10b) aufgenommen ist.

7. System nach Anspruch 6,
**dadurch gekennzeichnet, dass**
die zumindest eine individuelle Druckbasis (16a; 16b) zumindest teilweise von einem dentalen Positivabdruckmodell gebildet ist.

8. Erzeugnis, insbesondere Dentalobjekt, das zumindest teilweise mittels einer Dentaldruckvorrichtung (10a; 10b) nach einem der Ansprüche 1 bis 5 hergestellt ist, mit zumindest einem funktionellen Grundkörper (50a; 50b).

9. Erzeugnis nach Anspruch 8,
**dadurch gekennzeichnet, dass**
der funktionelle Grundkörper (50a; 50b) zumindest 95% eines Gesamtvolumens beträgt.

10. Verfahren zur Herstellung eines Erzeugnisses (48a; 48b) mittels einer Dentaldruckvorrichtung (10a; 10b), insbesondere nach einem der Ansprüche 1 bis 5, mit zumindest einer individuellen Druckbasis (16a; 16b), die zumindest eine individuell dreidimensional geformte Druckfläche (22a; 22b) aufweist, wobei das Erzeugnis (48a; 48b) direkt auf zumindest eine individuell dreidimensional geformte Druckfläche (22a; 22b) zumindest einer Druckbasis (16a; 16b) aufgedruckt wird.

11. Verfahren nach Anspruch 10,
**dadurch gekennzeichnet, dass**
in einem Schritt (80a; 80b) der Druckkopf (12a; 12b) zumindest im Wesentlichen senkrecht zu einem direkt darunter liegenden Bereich der Druckfläche (22a; 22b) ausgerichtet ist.

12. Verfahren nach Anspruch 10 oder 11,
**dadurch gekennzeichnet, dass**
in einem weiteren Schritt (102b) vor einem Druck ein adhäsives Trägermaterial (52b) auf die Druckfläche (22b) der Druckbasis (16b) aufgebracht wird.
